# EUROPÄISCHE PATENTSCHRIFT

(11) **EP 1 450 068 B1**
(45) Veröffentlichungstag und Bekanntmachung des Hinweises auf die Patenterteilung: **05.10.2005**
(21) Anmeldenummer: 03028068.9
(22) Anmeldetag: 09.12.2003
(51) Int. Cl.: F16F 13/10

(54) **Hydrolager**
Hydraulic support
Support hydraulique

(30) Priorität: 21.02.2003 DE 10307680
(43) Veröffentlichungstag der Anmeldung: 25.08.2004
(73) Patentinhaber: Carl Freudenberg KG, 69469 Weinheim (DE)
(72) Erfinder: Winkler, Gerold, 69488 Birkenau (DE); Ridderskamp, Franz, 69469 Weinheim (DE)

(56) Entgegenhaltungen:
- EP-A- 0 381 198
- EP-A- 1 076 189
- EP-A- 1 193 418
- US-A- 5 316 275
- US-A- 5 848 782
- PATENT ABSTRACTS OF JAPAN Bd. 1998, Nr. 11, 30. September 1998 (1998-09-30) & JP 10 159888 A (TOYO TIRE & RUBBER CO LTD), 16. Juni 1998 (1998-06-16)
- PATENT ABSTRACTS OF JAPAN Bd. 0184, Nr. 32 (M-1654), 11. August 1994 (1994-08-11) & JP 6 129459 A (TOYODA GOSEI CO LTD), 10. Mai 1994 (1994-05-10)
- PATENT ABSTRACTS OF JAPAN Bd. 1996, Nr. 03, 29. März 1996 (1996-03-29) & JP 7 301278 A (TOYODA GOSEI CO LTD), 14. November 1995 (1995-11-14)

## Beschreibung

Die Erfindung betrifft ein Hydrolager, umfassend ein Traglager und ein Auflager, die durch einen Federkörper aus gummielastischem Werkstoff aufeinander abgestützt sind, wobei der Federkörper einen mit Dämpfungsflüssigkeit gefüllten Arbeitsraum begrenzt.

### Stand der Technik

Solche Hydrolager sind allgemein bekannt, beispielsweise aus der EP 0 547 287 B1. Der Federkörper der vorbekannten Hydrolager besteht zumeist aus Naturkautschuk oder aus EPDM, wobei die zuvor genannten Werkstoffe bis maximal etwa 150°C temperaturbeständig sind. Eine Beaufschlagung dieser Werkstoffe mit Temperaturen oberhalb von 150°C führt zu nachteilig veränderten Gebrauchseigenschaften und/oder zu einer Zerstörung des Werkstoffs.
Speziell dann, wenn Hydrolager in modernen Kraftfahrzeugen als Motorlager zur Anwendung gelangen, ist die zuvor genannte Temperaturbeständigkeit zu gering. In modernen Kraftfahrzeugen sind die Motorräume häufig weitgehend gekapselt, um Schallemissionen aus dem Motorraum in die Umgebung möglichst effizient zu reduzieren. Außerdem werden Motorräume immer kleiner, um zunehmend höhere Anforderungen an die Aerodynamik von Kraftfahrzeugen erfüllen zu können. Aus diesen Gründen werden hohe Temperaturen nur unzureichend vom Hydrolager ferngehalten und an die Umgebung des Motorraums abgeführt.

Wärme-Abschirmbleche, die zum Schutz von Hydrolagern zur Anwendung gelangen, sind wenig zufriedenstellend, da diese zusätzlichen Einbauraum benötigen und durch ihre separate Herstellung zusätzliche Kosten verursachen.

Aus dem nächstliegenden Stand der Technik, der EP 0 381 198 A1 ist ein Hydrolager bekannt, umfassend ein Traglager und ein Auflager, die durch einen Federkörper aus Gummimaterial aufeinander abgestützt sind, wobei der Federkörper einen mit einer elektroviskosen Dämpfungsflüssigkeit gefüllten Arbeitsraum begrenzt und wobei auf der dem Arbeitsraum zugewandten Seite des aus Gummimaterial bestehenden Federkörpers eine Gummi-Schutzschicht aus NBR angeordnet ist. Während der bestimmungsgemäßen Verwendung des Hydrolagers variiert die Stromdichte in der elektroviskosen Dämpfungsflüssigkeit und damit die Wärme im Arbeitsraum.

Aus der EP 1 193 418 A1 ist eine Hydrobuchse bekannt, die einen inneren Stützkörper umfasst, der außenumfangsseitig von einem Federkörper aus Gummi umschlossen ist. Der äußere Stützkörper, der mittels des Federkörpers aus Gummi mit dem inneren Stützkörper verbunden ist, besteht aus einem polymeren Werkstoff. Der innere Stützkörper und der äußere Stützkörper sind jeweils stoffschlüssig mit dem Federkörper verbunden. Zumindest der aus polymerem Werkstoff bestehende äußere Stützkörper ist außenumfangsseitig mit einer Beschichtung aus elastischem Werkstoff versehen. Der Federkörper weist beispielsweise sich in axialer Richtung erstreckende Durchbrechungen auf, die bevorzugt ebenfalls mit einer Beschichtung aus elastischem Material versehen sind.
Die Aufgabe, die durch die Beschichtungen aus elastischem Material gelöst werden soll, wird in der Beständigkeit gegen äußere Einflüsse/Umwelteinflüsse gesehen, insbesondere eine Beständigkeit gegen Feuchtigkeit in Form von Spritzwasser, geschmolzenem Schnee, Luftfeuchtigkeit und Frostschutz-mittel. Die Beschichtungen weisen eine Dicke zwischen 10 und 3000 µm auf, um die Gebrauchseigenschaften der vorbekannten Buchse nicht nachteilig zu beeinflussen. Werkstoffe, aus denen die Beschichtung bestehen kann, sind beispielsweise NBR oder EPDM.

Aus der EP 1 076 189 A2 ist ein Hydrolager bekannt, dessen flexible Begrenzungswand aus einem Silicon-Elastomer bestehen kann. Die flexible Begrenzungswand ist unterschiedlich dick ausgeführt um eine konstante Federrate zu erreichen und eine bessere Anpassung an die jeweiligen Gegebenheiten des Anwendungsfalls.

Aus der JP 7 301 278 A ist ein Hydrolager bekannt, umfassend ein Traglager und ein Auflager, die durch einen hohlkegelförmigen Federkörper aus elastomerem Werkstoff aufeinander abgestützt sind. Zwischen dem Auflager und dem Federkörper und dem Traglager und dem Federkörper sind zwei miteinander verbundene Schichten angeordnet.

Aus der US 5,848,782 ist ein Hydrolager bekannt, mit einem Traglager und einem Auflager, die durch einen Federkörper aus gummielastischem Werkstoff aufeinander abgestützt sind. Der Federkörper begrenzt einen mit Dämpfungsflüssigkeit gefüllten Arbeitsraum und weist auf seiner dem Arbeitsraum zugewandte Seite eine Membranwand auf, die sich gegen bzw. an die Form des Federkörpers anpasst. Die Membranwand ist ein Bestandteil eines fluiddichten Moduls, in dem die Dämpfungsflüssgkeit enthalten ist, wobei das Modul eine vormontierbare Einheit bildet, die in ihrer Gesamtheit in das Hydrolager eingebaut wird. Als Dämpfungsflüssigkeit kommt ein elektro-rheologisches Fluid zur Anwendung, um durch Anlegen einer Spannung die Viskosität der Dämpfungsflüssigkeit einstellen zu können. Speziell bei Verwendung einer derartigen Dämpfungsflüssigkeit ist eine präzise Positionierung von Drähten, Kontakten, Verbindungsstücken und Sensoren wichtig, die beschädigungs-, verschiebungs- oder verschmutzungsanfällig sind. Die Aufgabe, die der vorbekannten Erfindung zugrunde liegt, wird darin gesehen, ein neuartiges, vereinfachtes Verfahren zur Herstellung und zum Zusammenbau von Hydrolagern zu zeigen.
Die vormontierbare, fluidgefüllte Einheit ist durch elastisch nachgiebige Membranwände begrenzt, die aus einem polymeren Werkstoff bestehen, beispielsweise aus Polyethylen oder Polypropylen.

### Darstellung der Erfindung

Der Erfindung liegt die Aufgabe zugrunde, ein Hydrolager der eingangs genannten Art derart weiterzuentwickeln, dass es ohne Beeinträchtigung seiner Gebrauchseigenschaften und/oder seiner Lebensdauer mit Temperaturen deutlich oberhalb von 150°C unmittelbar beaufschlagbar ist und im Vergleich zu üblichen Hydrolagern aus dem Stand der Technik keine vergrößerten Abmessungen aufweist.

Diese Aufgabe wird erfindungsgemäß durch ein Hydrolager gemäß Anspruch 1 gelöst. Auf vorteilhafte Ausgestaltungen nehmen die Unteransprüche Bezug.

Zur Lösung der Aufgabe ist es vorgesehen, dass der Federkörper aus Silikon-Elastomer besteht und auf der dem Arbeitsraum zugewandten Seite eine Schutzschicht aus einem gegen die Dämpfungsflüssigkeit resistenten und von der Dämpfungsflüssigkeit undurchdringbaren Werkstoff aufweist.

Ein Federkörper aus Silikon-Elastomer ist im Vergleich zu einem Federkörper, der beispielsweise aus EPDM besteht mit deutlich höheren Temperaturen beaufschlagbar, ohne dass seine Gebrauchseigenschaften nachteilig beeinflusst und/oder seine Lebensdauer verkürzt würde. Durch den aus Silikon-Elastomer bestehenden Federkörper ist das erfindungsgemäße Hydrolager problemlos mit Temperaturen im Bereich von bis zu 200°C beaufschlagbar und daher prädestiniert für die Anwendung als Motorlager in sehr kompakten und/oder vollgekapselten Motorräumen. Die Schutzschicht ist vorgesehen, da übliche und kostengünstig verfügbare Werkstoffe aus Silikon-Elastomer nicht gegen Dämpfungsflüssigkeit beständig sind, die sich innerhalb des Arbeitsraums von Hydrolagern befindet. Bei der Dämpfungsflüssigkeit handelt es sich meist um ein Gemisch aus Glykol und Wasser. Dieses Gemisch würde ohne Schutzschicht in Oberflächen von Silikonfederkörpem eindringen und während der Gebrauchsdauer durch diese hindurchdiffundieren.
Die Anwendung spezieller Silikonmischungen und/oder einer speziellen Dämpfungsflüssigkeit zur Vermeidung dieser Probleme ist in wirtschaftlicher Hinsicht wenig zufriedenstellend.
Zum Schutz der Oberfläche des Silikonfederkörpers, die dem Arbeitsraum zugewandt ist, ist die Schutzschicht vorgesehen. Die Schutzschicht kann aus einem für Federkörper üblichen Material, beispielsweise aus Naturkautschuk oder EPDM bestehen, wobei diese Werkstoffe zur Herstellung von Hydrolager-Federkörpem bereits bewährt sind. Diese Werkstoffe sind gegen die Dämpfungsflüssigkeit resistent und von der Dämpfungsflüssigkeit nicht durchdringbar.

Die Schutzschicht ist derart dimensioniert, dass sie nur einen vernachlässigbar geringen Einfluss auf die Gebrauchseigenschaften des Hydrolagers hat.

Der Federkörper kann, wie bei herkömmlichen Hydrolagern üblich, im wesentlichen kegelstumpfförmig ausgebildet sein. Die Gestaltung und/oder die Dimensionierung des Federkörpers kann der mit der Konstruktion von Hydrolagern betraute Fachmann an die jeweiligen Gegebenheiten des Anwendungsfalles anpassen, ohne erfinderisch tätig zu werden. Hinsichtlich der Ausgestaltung und/oder der Dimensionierung ergeben sich zwischen EPDM-Federkörpern und Silikon-Federkörpem keine gravierenden Unterschiede, so dass Geometrien von bewährten EPDM-Federkörpern im Wesentlichen unverändert auf Federkörper aus Silikon-Elastomer übertragbar sind.

Der Federkörper und die Schutzschicht können stoffschlüssig verbunden sein. Hierbei ist von Vorteil, dass die Gebrauchseigenschaften des Hydrolagers besser vorhersehbar sind, da keine mechanische Verkrallung zwischen dem Tragkörper und der Schutzschicht vorgesehen ist. Die unterschiedlichen Werkstoffe von Federkörpern und Schutzschicht liegen in klar abgegrenzten Bereichen vor. Einen Bereich, in dem sowohl der Werkstoff des Federkörpers als auch der Werkstoff der Schutzschicht vorkommen, beispielsweise durch formschlüssige Verkrallung, gibt es nicht.

Eine stoffschlüssige Verbindung zwischen dem Federkörper und der Schutzschicht kann beispielsweise dadurch erfolgen, dass in einem ersten Verfahrensschritt die dünne, schalenförmige Schutzschicht, beispielsweise aus EPDM, gespritzt wird. In einem zweiten Verfahrensschritt wird der Federkörper aus Silikon an die Schutzschicht angespritzt, wobei sich in dem Bereich der einander zugewandten Oberflächen von Schutzschicht und Federkörper eine stoffschlüssige Verbindung ergibt. Eine Umkehr der Verfahrensschritte, wobei in einem ersten Verfahrensschritt der Federkörper aus Silikon-Elastomer gespritzt wird und in einem zweiten Verfahrensschritt die Schutzschicht aus einem vergleichsweise härteren Werkstoff, beispielsweise EPDM an den Federkörper aus Silikon-Elastomer angespritzt wird, ist zwar generell möglich, ist aber im Hinblick darauf, dass das vergleichsweise weichere Silikon-Elastomer beim Anspritzen der dünnen, härteren Schicht EPDM Falten werfen würde, nicht unproblematisch.

Nach einer anderen Ausgestaltung können der Federkörper und die Schutzschicht ungehaftet miteinander verbunden sein. Der Federkörper und die Schutzschicht können formschlüssig verbunden sein. Im Gegensatz zu einer gehafteten Verbindung zwischen Federkörper und Schutzschicht ist bei einer solchen Ausgestaltung von Vorteil, dass Federkörper und Schutzschicht einzeln hergestellt werden und bei der Montage des Hydrolagers zusammen gesetzt werden.

Gemäß einer vorteilhaften Ausgestaltung kann es vorgesehen sein, dass die Schutzschicht die dem Arbeitsraum zugewandte Oberfläche des Federkörpers vollflächig überdeckt. Eine teilweise anliegend berührende Schutzschicht kann weiter verbesserte Gebrauchseigenschaften erzielen.

Bevorzugt besteht die Schutzschicht aus EPDM. Hierbei ist von Vorteil, dass EPDM, im Vergleich zu einer Schutzschicht aus Naturkautschuk, eine etwas höhere Temperaturbeständigkeit aufweist und deshalb das gesamte Hydrolager mit höheren Temperaturen beaufschlagbar ist. In jedem Fall liegt die Temperatur der Schutzschicht auch dann unter ihrem kritischen Bereich von 120 bis 150°C, wenn der Federkörper außenseitig mit Temperaturen im Bereich von bis zu 200°C beaufschlagt ist. Der Federkörper bewirkt die guten Gebrauchseigenschaften des Hydrolagers hinsichtlich einer guten Temperaturbeständigkeit und eines vorteilhaften Federverhaltens. Durch die Schutzschicht wird eine ausreichende Beständigkeit gegen die Dämpfungsflüssigkeit erreicht.

Das Verhältnis aus der Materialstärke des Federkörpers an seiner stärksten Stelle zur Materialstärke der Schutzschicht, jeweils im Längsschnitt des Hydrolagers betrachtet, kann zumindest 2 betragen. Bevorzugt beträgt das Verhältnis zumindest 8. Die geringstmögliche Materialstärke der Schutzschicht ist ausschließlich abhängig von der Beständigkeit der Schutzschicht gegen die Dämpfungsflüssigkeit. Eine andere Aufgabe hat die Schutzschicht demgegenüber nicht.
Je dünner die Materialstärke der Schutzschicht ist, desto geringer ist der Einfluss der Schutzschicht auf die Gebrauchseigenschaften des Federkörpers.

Bevorzugt kann die Schutzschicht eine Materialstärke von 1 bis 4 mm aufweisen.

Die Schutzschicht kann in allen Teilbereichen eine übereinstimmende Materialstärke aufweisen. Die Herstellung des Hydrolagers wird dadurch vereinfacht, und das Hydrolager ist insgesamt kostengünstig herstellbar. Außerdem sind die Einfluss der Schutzschicht auf die Gebrauchseigenschaften des Hydrolagers dann besser vorhersehbar.

### Kurzbeschreibung der Zeichnungen

Ein Ausführungsbeispiel des erfindungsgemäßen Hydrolagers ist nachfolgend anhand der Figur näher beschrieben. Diese zeigt jeweils in schematischer Darstellung:

Ein Ausführungsbeispiel eines Hydrolagers, bei dem der Federkörper und die Stützschicht stoffschlüssig verbunden sind.

### Ausführung der Erfindung

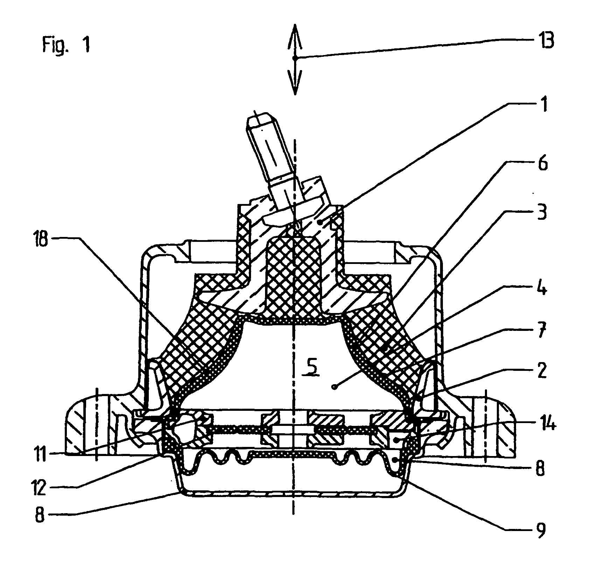

In Figur 1 ist ein Hydrolager gezeigt, das in seinem generellen Aufbau im Wesentlichen üblichen Hydrolagern entspricht.
Das Hydrolager umfasst ein Traglager 1 und ein Auflager 2, die durch den Federkörper 3 aufeinander abgestützt sind. Das Traglager 1, das Auflager 2 und ein den Ausgleichsraum 8 abschließender, im Wesentlichen drucklos Volumen aufnehmender Rollbalg 9 begrenzen den Arbeitsraum 5 und den Ausgleichsraum 8, die jeweils mit Dämpfungsflüssigkeit 4 gefüllt und durch eine Trennwand 10 voneinander getrennt sind. Die Trennwand 10 besteht in den hier gezeigten Ausführungsbeispielen jeweils aus einem Düsenkäfig 11, wobei innerhalb des Düsenkäfigs 11 eine Membran 12 in Richtung der eingeleiteten Schwingungen 13 schwingfähig angeordnet ist. Die Membran 12 wird radial außenseitig von einem Dämpfungskanal 14 umschlossen, der den Arbeitsraum 5 und den Ausgleichsraum 8 strömungsleitend verbindet.

Zur Dämpfung tieffrequenter, großamplitudiger Schwingungen, wird die Flüssigkeitssäule aus Dämpfungsflüssigkeit, die sich innerhalb des Dämpfungskanals 14 befindet, zwischen dem Arbeits- 5 und dem Ausgleichsraum 8 gegenphasig zu den eingeleiteten Schwingungen hin- und her verlagert. Zur Isolierung höherfrequenter, kleinamplitudiger Schwingungen ist die Membran 12 innerhalb des Düsenkäfigs 11 gegenphasig zu den eingeleiteten Schwingungen hin- und her beweglich. Die Ausgestaltung der Trennwand 10 kann dabei beliebig sein und den aus dem Stand der Technik hinlänglich bekannten Trennwänden von Hydrolagern entsprechen.

Der Federkörper 3 besteht aus Silikon-Elastomer und weist auf der dem Arbeitsraum 5 zugewandten Seite eine Schutzschicht 6 auf, die in diesen Ausführungsbeispielen aus EPDM besteht.

Die dem Arbeitsraum 5 zugewandte Oberfläche 7 des Federkörpers 3 wird von der Schutzschicht 6 vollständig überdeckt und anliegend berührt. Dadurch ist die dem Arbeitsraum 5 zugewandte Oberfläche 7 des Federkörpers 3 optimal vor einer Beaufschlagung mit Dämpfungsflüssigkeit 4 geschützt und unerwünschte Geräusche während des Betriebs des Hydrolagers sind ausgeschlossen.

Der Federkörper 3 und die Schutzschicht 6 sind in diesem Ausführungsbeispiel stoffschlüssig miteinander verbunden, wobei in einem ersten Verfahrensschritt zunächst die Schutzschicht 6 aus EPDM gespritzt wird. Im Anschluß an die Verfestigung der Oberfläche der Schutzschicht 6 wird der aus Silikon-Elastomer bestehende Federkörper 3 an die Schutzschicht 6 angespritzt. Das Anspritzen erfolgt mittels eines geeigneten Haftvermittlers.

Im hier gezeigten Ausführungsbeispiel beträgt das Verhältnis aus der Materialstärke des Federkörpers 3 an einer stärksten Stelle zur Materialstärke der Schutzschicht 6, jeweils im Längsschnitt des Hydrolagers betrachtet, 15, wobei die Schutzschicht 6 in allen Teilbereichen eine übereinstimmende Materialstärke aufweist.

Der erfindungswesentliche Vorteil des beanspruchten Hydrolagers ist darin zu sehen, dass es durch den aus Silikon-Elastomer bestehenden Federkörper 3 von außen mit hohen Temperaturen im Bereich von bis zu 200°C, beispielsweise aus dem Motorraum eines Kraftfahrzeugs beaufschlagbar ist und dass der aus Silikon-Elastomer bestehende Federkörper 3 von der Dämpfungsflüssigkeit 4 weder angegriffen noch durchdrungen wird. Dadurch, dass der Federkörper 3 durch die Schutzschicht 6 vor einer Beaufschlagung mit Dämpfungsflüssigkeit 4 geschützt ist, sind teure Spezialwerkstoffe für den Federkörper 3 und/oder eine spezielle, ebenfalls teure Dämpfungsflüssigkeit 4 entbehrlich. Das Hydrolager ist daher kostengünstig herstellbar.

## Patentansprüche

1. Hydrolager, umfassend ein Traglager und ein Auflager, die durch einen Federkörper aus gummielastischem Werkstoff aufeinander abgestützt sind, wobei der Federkörper einen mit Dämpfungsflüssigkeit gefüllten Arbeitsraum begrenzt, **dadurch gekennzeichnet, dass** der Federkörper (3) aus Silikon-Elastomer besteht und auf der dem Arbeitsraum (5) zugewandten Seite eine Schutzschicht (6) aus einem gegen die Dämpfungsflüssigkeit (4) resistenten und von der Dämpfungsflüssigkeit (4) undurchdringbaren Werkstoff aufweist.

2. Hydrolager nach Anspruch 1, **dadurch gekennzeichnet, dass** der Federkörper (3) im Wesentlichen kegelstumpfförmig ausgebildet ist.

3. Hydrolager nach einem der Ansprüche 1 oder 2, **dadurch gekennzeichnet, dass** der Federkörper (3) und die Schutzschicht (6) stoffschlüssig verbunden sind.

4. Hydrolager nach einem der Ansprüche 1 oder 2, **dadurch gekennzeichnet, dass** der Federkörper (3) und die Schutzschicht (6) ungehaftet miteinander verbunden sind.

5. Hydrolager nach einem der Ansprüche 1 bis 4, **dadurch gekennzeichnet, dass** die Schutzschicht (6) die dem Arbeitsraum (5) zugewandte Oberfläche (7) des Federkörpers (3) vollflächig überdeckt und zumindest teilweise anliegend berührt.

6. Hydrolager nach Anspruch 5, **dadurch gekennzeichnet, dass** die Schutzschicht (6) die Oberfläche (7) vollständig anliegend berührt.

7. Hydrolager nach einem der Ansprüche 1 bis 6, **dadurch gekennzeichnet, dass** die Schutzschicht (6) aus EPDM besteht.

8. Hydrolager nach einem der Ansprüche 1 bis 7, **dadurch gekennzeichnet, dass** das Verhältnis aus der Materialstärke des Federkörpers (3) an seiner stärksten Stelle zur Materialstärke der Schutzschicht (6), jeweils im Längsschnitt des Hydrolagers betrachtet, zumindest 2 beträgt.

9. Hydrolager nach einem der Ansprüche 1 bis 8, **dadurch gekennzeichnet, dass** die Schutzschicht (6) eine Materialstärke von 1 bis 8 mm aufweist.

10. Hydrolager nach einem der Ansprüche 1 bis 9, **dadurch gekennzeichnet, dass** die Schutzschicht (6) in allen Teilbereichen eine übereinstimmende Materialstärke aufweist.

## Claims

1. Hydraulic bearing, comprising a supporting bearing and a mount, which are supported on each other by a spring body made of rubber-elastic material, the spring body delimiting a working chamber filled with damping fluid, **characterized in that** the spring body (3) consists of silicone elastomer and has on the side facing the working chamber (5) a protective layer (6) of a material which is resistant to the damping fluid (4) and cannot be penetrated by the damping fluid (4).

2. Hydraulic bearing according to Claim 1, **characterized in that** the spring body (3) is of a substantially frustoconical form.

3. Hydraulic bearing according to either of Claims 1 and 2, **characterized in that** the spring body (3) and the protective layer (6) are connected by material bonding.

4. Hydraulic bearing according to either of Claims 1 and 2, **characterized in that** the spring body (3) and the protective layer (6) are connected to each other without adhesion.

5. Hydraulic bearing according to one of Claims 1 to 4, **characterized in that** the protective layer (6) covers the surface (7) of the spring body (3) that is facing the working chamber (5) over its full area and is at least partly in contact with it.

6. Hydraulic bearing according to Claim 5, **characterized in that** the protective layer (6) is in full contact with the surface (7).

7. Hydraulic bearing according to one of Claims 1 to 6, **characterized in that** the protective layer (6) consists of EPDM.

8. Hydraulic bearing according to one of Claims 1 to 7, **characterized in that** the ratio of the material thickness of the spring body (3) at its thickest point to the material thickness of the protective layer (6), considered in each case in the longitudinal section of the hydraulic bearing, is at least 2.

9. Hydraulic bearing according to one of Claims 1 to 8, **characterized in that** the protective layer (6) has a material thickness of from 1 to 8 mm.

10. Hydraulic bearing according to one of Claims 1 to 9, **characterized in that** the protective layer (6) has in all areas a consistent material thickness.

## Revendications

1. Support hydraulique, comprenant un support porteur et un support d'appui, qui sont supportés l'un sur l'autre par un corps élastique en matériau élastomère, le corps élastique limitant un espace de travail rempli de liquide d'amortissement, **caractérisé en ce que** le corps élastique (3) se compose d'élastomère de silicone et présente, du côté tourné vers l'espace de travail (5), une couche de protection (6) constituée d'un matériau résistant au liquide d'amortissement (4) et imperméable au liquide d'amortissement (4).

2. Support hydraulique selon la revendication 1, **caractérisé en ce que** le corps élastique (3) est réalisé essentiellement avec une forme tronconique.

3. Support hydraulique selon l'une quelconque des revendications 1 ou 2, **caractérisé en ce que** le corps élastique (3) et la couche de protection (6) sont connectés par liaison de matière.

4. Support hydraulique selon l'une quelconque des revendications 1 ou 2, **caractérisé en ce que** le corps élastique (3) et la couche de protection (6) sont connectés l'un à l'autre sans adhésion.

5. Support hydraulique selon l'une quelconque des revendications 1 à 4, **caractérisé en ce que** la couche de protection (6) recouvre sur toute sa surface la surface (7) du corps élastique (3) tournée vers l'espace de travail (5) et vient en appui au moins partiellement sur celle-ci.

6. Support hydraulique selon la revendication 5, **caractérisé en ce que** la couche de protection (6) est en contact par application complète avec la surface (7).

7. Support hydraulique selon l'une quelconque des revendications 1 à 6, **caractérisé en ce que** la couche de protection (6) se compose d'EPDM.

8. Support hydraulique selon l'une quelconque des revendications 1 à 7, **caractérisé en ce que** le rapport de l'épaisseur de matériau du corps élastique (3) à son emplacement le plus épais à l'épaisseur de matériau de la couche de protection (6), à chaque fois considéré en coupe longitudinale du support hydraulique, est d'au moins 2.

9. Support hydraulique selon l'une quelconque des revendications 1 à 8, **caractérisé en ce que** la couche de protection (6) présente une épaisseur de matériau de 1 à 8 mm.

10. Support hydraulique selon l'une quelconque des revendications 1 à 9, **caractérisé en ce que** la couche de protection (6) présente, dans toutes les régions partielles, une épaisseur de matériau coïncidente.
